(19) Europäisches Patentamt
European Patent Office
Office européen des brevets

(11) **EP 4 563 266 A1**

(12) **EUROPEAN PATENT APPLICATION**
published in accordance with Art. 153(4) EPC

(43) Date of publication:
**04.06.2025 Bulletin 2025/23**

(21) Application number: **23846165.1**

(22) Date of filing: **05.07.2023**

(51) International Patent Classification (IPC):
**B22F 1/00** (2022.01)      **B22F 1/052** (2022.01)
**B22F 1/102** (2022.01)      **C09C 3/06** (2006.01)
**C09C 3/08** (2006.01)

(52) Cooperative Patent Classification (CPC):
**B22F 1/00; B22F 1/052; B22F 1/102; C09C 3/06; C09C 3/08**

(86) International application number:
**PCT/JP2023/024954**

(87) International publication number:
**WO 2024/024432 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2022 JP 2022119587**

(71) Applicant: **Taiyo Nippon Sanso Corporation**
**Tokyo 142-8558 (JP)**

(72) Inventors:
• **YAMAWAKI, Naoya**
**Tokyo 142-8558 (JP)**
• **TAKADA, Katsunori**
**Tokyo 142-8558 (JP)**
• **IGARASHI, Hiroshi**
**Tokyo 142-8558 (JP)**

(74) Representative: **HGF**
**HGF Limited**
**1 City Walk**
**Leeds LS11 9DX (GB)**

(54) **COMPOSITE COPPER NANOPARTICLES, AND METHOD FOR MANUFACTURING COMPOSITE COPPER NANOPARTICLES**

(57)    One object of the present application is to provide composite copper nanoparticles that have high dispersibility in organic solvents and can be used to form a smooth electrode film. The present invention provides composite copper nanoparticles in which the surfaces of copper nanoparticles are modified with a silane coupling agent, wherein the copper nanoparticles have a coating film containing copper oxide on at least a part of the surface, and wherein the mass carbon concentration derived from the silane coupling agent in the composite copper nanoparticles is 0.1 to 1.2% by mass with respect to the total mass of the composite copper nanoparticles or wherein the number of surface groups derived from the silane coupling agent on the surface of the composite copper nanoparticles is 1.0 to 13.0 per 1 nm$^2$ of the surface area of the composite copper nanoparticles

FIG. 1

EP 4 563 266 A1

**Description**

TECHNICAL FIELD

The present invention relates to composite copper nanoparticles and a method for manufacturing composite copper nanoparticles.

BACKGROUND ART

When applying ink or paste mainly containing copper nanoparticles for bonding various electronic components or forming wiring, the copper nanoparticles are easy to be aggregated due to their small particle size and ease of oxidation. In particular, the copper nanoparticles are difficult to maintain a dispersion state in a non-aqueous solvent, and when a thin film is formed with the ink or paste, unevenness is likely to occur and the smoothness is low. To address such problems, it is known to use copper nanoparticles of which the dispersibility has been improved by silane coupling treatment.

Patent Document 1 discloses a method for improving the dispersibility of copper nanoparticles by modifying the surface of the copper nanoparticles with a silane coupling agent having a vinyl group, and then reacting the modified surface with a monomer to form a graft polymer chain.

Patent Document 2 discloses a method for modifying the surface of copper hydride fine particles synthesized by a wet method with a silane coupling agent.

PRIOR ART DOCUMENTS

PATENT DOCUMENTS

Patent Document 1 Japanese Unexamined Patent Application, First Publication No. 2017-165796
Patent Document 2 Japanese Unexamined Patent Application, First Publication No. 2015-110682

SUMMARY OF INVENTION

PROBLEM TO BE SOLVED BY THE INVENTION

In the examples of Patent Document 1, the proportion of polymer chains is high at 2.8 to 7.0% by mass, and carbon residues are likely to remain when the electrode film is formed, which raises concerns about the impairment of adhesion of the electrode film and poor conductivity.

The composite copper nanoparticles in Patent Document 2 have not been surface-modified with a silane coupling agent, which raises concerns that they may not be able to disperse in organic solvents. In addition, the silane coupling agent is not used for the purpose of improving dispersibility, and only 0.1% by mass is added to the copper nanoparticles, which raises concerns that the composite copper nanoparticles may not be able to disperse sufficiently in organic solvents. There is a particular concern that agglomeration is more likely to occur in conductive pastes, which have a higher metal concentration than conductive inks.

The present invention has been made in view of the above circumstances, and an object of the present invention is to provide composite copper nanoparticles that have high dispersibility in organic solvents and can be used to form a smooth electrode film, and a method for producing composite copper nanoparticles.

MEANS FOR SOLVING THE PROBLEM

In order to solve the above problems, the present invention has the following aspects.

[1] Composite copper nanoparticles in which the surfaces of copper nanoparticles are modified with a silane coupling agent,

wherein the copper nanoparticles have a coating film containing copper oxide on at least a part of the surface, and wherein the mass carbon concentration derived from the silane coupling agent in the composite copper nanoparticles is 0.1 to 1.2% by mass with respect to the total mass of the composite copper nanoparticles.

[2] The composite copper nanoparticles according to [1], wherein the mass carbon concentration derived from the silane coupling agent in the composite copper nanoparticles is 0.2 to 0.5% by mass with respect to the total mass of the composite copper nanoparticles.

[3] The composite copper nanoparticles according to [1] or [2], wherein the mass carbon concentration derived from the copper nanoparticles in the composite copper nanoparticles is 0.3% by mass or less with respect to the total mass of the composite copper nanoparticles.

[4] Composite copper nanoparticles in which the surfaces of copper nanoparticles are modified with a silane coupling agent,

wherein the copper nanoparticles have a coating film containing copper oxide on at least a part of the surface, and wherein the number of surface groups derived from the silane coupling agent on the surface of the composite copper nanoparticles is 1.0 to 13.0 per 1 $nm^2$ of the surface area of the composite copper nanoparticles.

[5] The composite copper nanoparticles according to any one of [1] to [4], wherein the silane coupling agent is an alkylsilane.

[6] The composite copper nanoparticles according to [5], wherein the silane coupling agent is an alkylsilane having an alkyl chain having 3 to 10 carbon atoms.

[7] The composite copper nanoparticles according to [6], wherein the silane coupling agent is n-octyl trimethoxysilane.

[8] The composite copper nanoparticles according to any one of [1] to [7], wherein the average particle size of the copper nanoparticles is 200 nm or less.

[9] A method for manufacturing composite copper nanoparticles in which the surfaces of copper nanoparticles are modified with a silane coupling agent, comprising:

preparing copper nanoparticles having a coating film containing copper oxide on at least a part of the surface, an organic solvent, and a silane coupling agent;
preparing a mixture of the copper nanoparticles, the organic solvent, and the silane coupling agent; and pressurizing the mixture and feeding it into a capillary flow path, subjecting the mixture to collision and shear forces to disperse the mixture and obtain a dispersion;
wherein the amount of the silane coupling agent added is 0.6 to 3.3 times the amount equivalent to the formation of a monolayer on the surfaces of the copper nanoparticles.

EFFECTS OF THE INVENTION

According to the present invention, it is possible to provide composite copper nanoparticles that have high dispersibility in organic solvents and enable the formation of smooth electrode films, and a method for manufacturing composite copper nanoparticles.

BRIEF DESCRIPTION OF THE DRAWINGS

[FIG. 1] FIG. 1 is a graph showing the relationship between a mass carbon concentration derived from a silane coupling agent on composite copper nanoparticles (horizontal axis, unit: % by mass) and a median diameter of the composite copper nanoparticles (vertical axis, unit: $\mu$m).

[FIG. 2] FIG. 2 is a graph showing the relationship between the number of surface groups derived from a silane coupling agent on the surface of composite copper nanoparticles (horizontal axis, unit: pieces/nm2) and a median diameter of the composite copper nanoparticles (vertical axis, unit: $\mu$m).

DETAILED DESCRIPTION OF THE PREFERRED EMBODIMENTS

Although the embodiments of the present invention will be described in detail below, the present invention is not limited to the embodiments described below, and various modifications are possible without departing from the gist of the present invention.

The meanings and definitions of the terms used in the present description are as follows.

A numerical range expressed as "~" means a numerical range with the numerical values before and after ~ as the lower and upper limits.

The surface of copper nanoparticles being modified with a silane coupling agent means that a dehydration condensation reaction occurs between hydroxyl groups present on the surface of the copper nanoparticles and the silane coupling agent, resulting in silanol groups being bonded to the surface of the copper nanoparticles. Alternatively, even if no hydroxyl groups are present, it means that silanol groups formed by hydrolysis of the alkoxy groups of the silane coupling agent due to electrostatic interaction are adsorbed to the surface of the copper nanoparticles, and then a monomolecular film is formed on the surface by dehydration condensation between the silane coupling agents themselves.

[Composite copper nanoparticles]

The composite copper nanoparticles of the present invention are composite copper nanoparticles in which the surfaces of copper nanoparticles are modified with a silane coupling agent, and the copper nanoparticles have a coating film containing copper oxide on at least a part of the surfaces.

The mass carbon concentration derived from the silane coupling agent in the composite copper nanoparticles is 0.1 to 1.2% by mass, preferably 0.2 to 0.5% by mass, and more preferably 0.25 to 0.4% by mass with respect to the total mass of the composite copper nanoparticles.

If the mass carbon concentration derived from the silane coupling agent is less than 0.1% by mass, it is not possible to impart sufficient hydrophobicity to the composite copper nanoparticles, and aggregation will begin from the non-hydrophobicized parts, inhibiting dispersibility and causing a large particle size distribution.

If the mass carbon concentration derived from the silane coupling agent exceeds 1.2% by mass, the excessively attached silane coupling agents start to aggregate with each other, hindering dispersibility and increasing the particle size distribution. Also, if the mass carbon concentration derived from the silane coupling agent exceeds 1.2% by mass, carbon residues tend to remain during the deposition of the electrode film, which may cause deterioration in electrical conductivity or damage to the electrode film during degassing.

The mass carbon concentration derived from the silane coupling agent is calculated by measuring the mass carbon concentration of the composite copper nanoparticles and the mass carbon concentration of the copper nanoparticles in a raw material state before reacting with the silane coupling agent by a method described below, and calculating the difference between the measured values of the composite copper nanoparticles and the copper nanoparticles.

<Copper nanoparticles>

The copper nanoparticles have a coating film containing copper oxide on at least a part of the surface. Examples of such copper nanoparticles include those manufactured by a dry method using a reducing flame. The copper nanoparticles manufactured by the dry method have little thermal shrinkage even when sintered at 300°C or higher. In contrast, copper nanoparticles synthesized by a wet method have large thermal shrinkage.

The copper oxide may be copper (I) oxide, copper (II) oxide, or a mixture thereof. When the copper oxide is a mixture of copper (I) oxide and copper (II) oxide, the ratio of the amounts is not particularly limited.

The copper nanoparticles preferably have an average particle size of 10 to 200 nm, more preferably 10 to 150 nm. When the average particle size of the copper nanoparticles is 200 nm or less, the composite copper nanoparticles have excellent dispersibility when made into a paste, and when the average particle size is 150 nm or less, the dispersibility is better. On the other hand, when the average particle size of the copper nanoparticles exceeds 200 nm, the weight per particle increases, so that the steric effect of the alkyl chain of the silane coupling agent does not function sufficiently, and the dispersibility when the composite copper nanoparticles are made into a paste tends to decrease.

[Average particle size]

The average particle size of the copper nanoparticles can be measured using a scanning electron microscope (SEM). For example, the particle size of 250 copper nanoparticles present in one field of view in an electron microscope image is measured, and the average value is calculated as the average particle size of the copper nanoparticles.

The criteria for selecting particles to be measured from those shown in a scanning electron microscope image (photograph) are as follows (1) to (6).

(1) Particles with a part outside the field of view of the photograph are not measured.
(2) Particles that have a clear outline and exist in isolation are measured.
(3) Particles that deviate from the average particle shape are measured if they are independent and can be measured as single particles.
(4) Particles that overlap but have a clear boundary between them and whose overall shape can be determined are measured as single particles.
(5) Particles that overlap each other, have an unclear boundary, and whose overall shape cannot be determined are not measured as their shape cannot be determined.
(6) For particles that are not perfectly circular, such as ellipses, the major axis is taken as the particle diameter.

The surface of the copper nanoparticles is covered with a coating film containing copper oxide. The copper oxide contained in the coating film functions as a reaction site with the silane coupling agent.

The coating film on the surface of the copper nanoparticles may contain copper carbonate in addition to copper oxide as a copper compound, but copper carbonate does not react with the silane coupling agent. Therefore, it is preferable that the mass carbon concentration derived from mass in the copper nanoparticles be 0.3% by mass or less.

[Mass carbon concentration]

The mass carbon concentration in the copper nanoparticles and the composite copper nanoparticles can be measured using a carbon-sulfur analyzer (e.g., "EMIA-920V" manufactured by Horiba, Ltd.). The mass carbon concentration in the copper nanoparticles and the composite copper nanoparticles is the number-average value of three samples.

<Silane coupling agent>

The silane coupling agent is not particularly limited as long as it can be chemically bonded to the surface of the copper nanoparticles by a silane coupling reaction and improves dispersibility in a solvent. Examples of such silane coupling agents include alkylsilanes that have only alkyl chains as surface groups, aminoalkylsilanes that have amino groups, and arylsilanes that have phenyl groups. Specific examples of alkylsilanes include n-octyl trimethoxysilane, n-octyl triethoxysilane, dodecyl triethoxysilane, octadecyl trimethoxysilane, and octadecyl triethoxysilane. Examples of aminoalkylsilanes include 3-aminopropyl trimethoxysilane and 3-(2-aminoethylamino)propyl trimethoxysilane. Examples of arylsilanes include phenyl trimethoxysilane. Among the above-mentioned silane coupling agents, alkylsilanes are preferred for use in modifying the surface of the copper nanoparticles, and n-octyl trimethoxysilane is more preferred. By using alkylsilanes, the carbon content of the composite copper nanoparticles can be reduced without impairing the dispersibility of the composite copper nanoparticles in organic solvents.

The alkyl chain of the silane coupling agent is preferably an alkyl chain with 3 or more carbon atoms, more preferably an alkyl chain with 6 or more carbon atoms, and even more preferably an alkyl chain with 8 or more carbon atoms. If the alkyl chain has 3 or more carbon atoms, the alkyl chain can exert a three-dimensional effect by bonding an amount of the silane coupling agent equivalent to the formation of a monolayer to the surface of the copper nanoparticles.

On the other hand, if the alkyl chain is longer than necessary, it will cause an increase in carbon residue when the composite copper nanoparticles are sintered and applied to electrode applications. Therefore, it is preferable that the alkyl chain of the silane coupling agent have 10 or less carbon atoms.

In the composite copper nanoparticles in which the surfaces of the copper nanoparticles are modified with the silane coupling agent, the number of surface groups derived from the silane coupling agent on the surfaces of the composite copper nanoparticles, i.e., the number of surface groups of the silane coupling agent attached to the surfaces of the copper nanoparticles, is 1.0 to 13.0 per $nm^2$, preferably 1.0 to 5.0 per $nm^2$, and more preferably 2.0 to 4.0 per $nm^2$.

The number of surface groups is calculated by the following formula (A).

[Formula (A)]

$$\text{Number of surface groups} = \frac{\text{Mass carbon concentration derived from silane coupling agent} \times 10^{-2}}{\text{Molar mass of carbon atoms contained in silane coupling agent}} \times \frac{\text{Avogadro constant}}{\text{Specific surface area of copper nanoparticles} \times 10^{18}} \quad ...(A)$$

As a result of intensive research, the inventors have found that when the surface of copper nanoparticles, which have the coating film containing copper oxide on at least a part of the surface, is modified with alkylsilane, which is a silane coupling agent, so that the entire surface of one copper nanoparticle is covered with a single layer of alkylsilane, which is a silane coupling agent (hereinafter, this is called monolayer formation), the area occupied by one molecule of alkylsilane, which is a silane coupling agent, is 0.33 $nm^2$.

Alkylsilanes are compounds represented by the chemical formula $R\text{-}Si(OR')_3$, where R and R' are alkyl groups which may be different from each other.

When an alkylsilane bonds to the surface of a copper nanoparticle, the silane coupling agent, which is an alkylsilane, is thought to be chemically bonded perpendicularly to the surface of the copper nanoparticle. The type of R' has no effect since the alkoxy group (OR') is hydrolyzed. In other words, if the silane coupling agent is an alkylsilane, the area occupied by one molecule of the silane coupling agent on the copper nanoparticle surface is the same, 0.33 $nm^2$, regardless of the length of the alkyl chain. From this value, the number of molecules of the silane coupling agent when forming a monolayer of the silane coupling agent on the surface of the copper nanoparticle is three per 1 $nm^2$.

When the number of surface groups of the silane coupling agent is 1.0 or more per $nm^2$, the area of the hydrophobic copper nanoparticle surface will be 30% or more. Because the non-hydrophobic portion is a moderate 30% or more, aggregation is less likely to begin, dispersibility is less likely to be hindered, and the particle size distribution will be narrow.

In addition, when the number of surface groups of the silane coupling agent is 13.0 or less per $nm^2$, the silane coupling agents are less likely to aggregate with each other, so good dispersibility is maintained and the particle size distribution is narrow.

The composite copper nanoparticles of the present invention can be efficiently surface-treated with an optimal amount of the silane coupling agent, and therefore do not produce aggregates derived from residual silane coupling agent. They have high dispersibility in organic solvents and can form smooth electrode films.

[Method for manufacturing composite copper nanoparticles]

The method for manufacturing composite copper nanoparticles of the present invention is a method for manufacturing composite copper nanoparticles by modifying the surface of the copper nanoparticles with a silane coupling agent, wherein copper nanoparticles having a coating film containing copper oxide on at least a part of the surface are prepared, and a dispersion, in which the copper nanoparticles, an organic solvent, and the silane coupling agent are mixed and dispersed, is reacted while being heated and stirred.

<Preparation step>

First, in the preparation step, copper nanoparticles having a coating film containing copper oxide on at least a part of the surface, that is, copper nanoparticles manufactured by a dry method using a reducing flame, are prepared.

The copper nanoparticles can be manufactured by, for example, the method disclosed in Japanese Patent No. 6130616. In addition, if copper nanoparticles are commercially available, they may be used.

As long as the copper nanoparticles are manufactured by a dry method, the manufacturing method is not limited to the above example. For example, copper nanoparticles can also be obtained by a method of reducing a copper compound gas with a reducing gas, or a method of cooling copper vaporized by plasma.

<Mixing process>

The copper nanoparticles, the organic solvent, and the silane coupling agent are mixed, and the mixture is subjected to dispersion treatment to produce a copper nanoparticle mixture dispersion.

Methods for dispersing the copper nanoparticles include a method in which the mixture is pressurized and sent through a thin tube channel, collided to apply shear force to disperse it, and a method in which the mixture is dispersed using a bead mill, or a method in which the mixture is dispersed using a blade or roll.

The organic solvent is not particularly limited as long as it is capable of dissolving the silane coupling agent and dispersing the copper nanoparticles. Examples of the organic solvent include alcohols such as methanol, ethanol, 1-propanol, 2-propanol, and terpineol; polyols such as ethylene glycol, dimethylene glycol, and triethylene glycol; ethers such as diethylene glycol monobutyl ether; N,N-dimethylformamide, and N-methylpyrrolidone.

<Reaction process>

Next, in a reaction process, the obtained dispersion of the copper nanoparticle mixture is heated and stirred to chemically bond the silane coupling agent to the surface of the copper nanoparticles.

The obtained dispersion of the copper nanoparticle mixture is preferably stirred at 30 to 250°C, and more preferably at 50 to 150°C.

The amount of the silane coupling agent added to the dispersion is 0.6 to 3.3 times, and preferably 0.6 to 1.25 times, the amount equivalent to the formation of a monolayer on the surfaces of the copper nanoparticles in the dispersion.

If the amount of silane coupling agent added is 0.6 times or more the amount equivalent to the formation of a monolayer on the surfaces of the copper nanoparticles, the silane coupling agent can be sufficiently attached to the surfaces of the copper nanoparticles.

If the amount of silane coupling agent added is 3.3 times or less the amount equivalent to the formation of a monolayer on the surface of the copper nanoparticles, the generation of aggregates due to reactions between the silane coupling agents can be suppressed. Furthermore, the effect of making it easier to remove unreacted silane coupling agent can be obtained.

The mixing process and the reaction process may be carried out simultaneously. For example, the dispersion process may be carried out while heating the mixed liquid with a heater or the like, or the reaction process may be carried out by utilizing the heat generated by shear during the dispersion process.

The amount equivalent to forming a monolayer is the amount of the silane coupling agent added that results in the silane coupling agent adhering to all surfaces of the copper nanoparticles. Specifically, the amount equivalent to forming a monolayer is calculated by calculating "surface area of copper nanoparticles / area occupied by one molecule of silane coupling agent = number of molecules of silane coupling agent" and then calculating the amount equivalent to forming a monolayer from the number of molecules and the mass per molecule of silane coupling agent.

[How to calculate total surface area of copper nanoparticles]

The specific surface area of the copper nanoparticles to be treated with the silane coupling agent is measured using a specific surface area meter (e.g. Macsorb HM model-1201 manufactured by Mountec Co., Ltd.). The measurement result is multiplied by the weight of the copper nanoparticles to be treated with the silane coupling to obtain the total surface area of the copper nanoparticles.

(Calculation example)

Measured specific surface area: 6.0 m$^2$/g
Weight of copper nanoparticles: 100 g
Total surface area of copper nanoparticles = 6.0 x 100 = 600 m$^2$

The amount equivalent to the formation of a monolayer on the surface of the copper nanoparticles is calculated by the following formula (B).

[Formula **B**]

$$\text{Amount of equivalent to formation of monolayer} = \frac{\text{Total surface area of copper nanoparticles}}{\text{Area occupied by one molecule of silane coupling agent}} \times \frac{\text{Molecular weight of silan coupliing agent}}{\text{Avogadro constant}} \quad ...(B)$$

<Washing process>

Next, in a washing process, the copper nanoparticle mixture that has completed the reaction process is washed by adding an organic solvent and stirring. A stirrer, ultrasonic bath, shaker, and the like can be used for stirring.

The washing process can also be omitted.

<Drying process>

Next, as a drying process, the copper nanoparticle mixture after the reaction process or the washing process can be dried by filtration, reduced pressure drying, air drying, spray drying, or the like. Each of these methods can be used alone, or two or more thereof can be used in combination.

As described above, according to the manufacturing method for composite copper nanoparticles of the present invention, the composite copper nanoparticles in which the surface of the copper nanoparticles is modified with a silane coupling agent can be obtained, and therefore composite copper nanoparticles with high dispersibility in organic solvents can be manufactured. **In** addition, in the manufacturing method for composite copper nanoparticles of the present invention, it is preferable to use copper nanoparticles manufactured by a dry method. Composite copper nanoparticles obtained using copper nanoparticles manufactured by a dry method have little thermal shrinkage even when sintered at 300°C or higher, and can form a particularly smooth electrode film.

[Effects]

**In** the present invention, in composite copper nanoparticles in which the surface of copper nanoparticles is modified with a silane coupling agent, the mass carbon concentration derived from the silane coupling agent is adjusted within the range of 0.1 to 1.2% by mass with respect to the total mass of the composite copper nanoparticles. Alternatively, the surface groups derived from the silane coupling agent on the surface of the composite copper nanoparticles are adjusted within the range of 1.0 to 13.0 per 1 $nm^2$ of the surface area of the composite copper nanoparticles. This provides excellent dispersibility in organic solvents and suppresses aggregates. As a result, the median diameter of the composite copper nanoparticles of the present invention is small, and the electrode film formed using the composite copper nanoparticles of the present invention has excellent smoothness.

In the present invention, in the manufacture of composite nanoparticles, the amount of the silane coupling agent added is adjusted within the range of 0.6 to 3.3 times the amount equivalent to the formation of a monolayer on the surface of the copper nanoparticles. This makes it possible to manufacture composite copper nanoparticles with high dispersibility in organic solvents.

EXAMPLES

The effects of the present invention will be described below with reference to examples, but the present invention is not limited to the configurations of the examples.

[Manufacture example 1]

Manufacture of copper nanoparticles

Copper nanoparticles were manufactured by the manufacturing method described in Patent No. 6130616. The manufacturing conditions were as follows:

    Powder raw material: copper powder copper oxide (I) (manufactured by Nippon Atomize Processing Co., Ltd., average particle size: 10 $\mu$m)
    Fuel gas supplied to the burner: liquefied natural gas
    Combustion support gas: oxygen
    First cooling gas that forms a swirling flow in the furnace: nitrogen
    Oxygen ratio: 0.9
    Raw material supply rate: 0.36 kg/h

As a result, copper nanoparticles with an average particle size of 110 nm and a mass carbon concentration of 0.16% by mass were obtained.

[Example 1]

20 g of copper nanoparticles with an average particle size of 110 nm and a mass carbon concentration of 0.16% by mass, and 15.8 g of ethanol were weighed out into a beaker, and 0.16 g of n-octyl trimethoxysilane (OTMS) (= amount equivalent to forming a monolayer) was added as a silane coupling (SC) agent.

After stirring this mixture with a magnetic stirrer for 10 minutes, the mixture was pressurized to a pressure of 100 MPa using "Nano Vaita B-ED" manufactured by YOSHIDA KIKAI Co., Ltd., and sent into a thin tube channel where the mixture was collided with and dispersed by applying shear force, a process that was repeated 10 times.

The obtained dispersion was placed in a pressure-resistant container and stirred with a magnetic stirrer for 30 minutes while immersed in an 80°C water bath.

After 30 minutes, the obtained mixture was filtered to separate the solid and liquid, and 50 g of ethanol was added to the separated solid and stirred in an ultrasonic bath for 10 minutes.

The obtained mixture was filtered again to separate the solid and liquid, and then the separated solid was dried with a blower to obtain a composite copper nanoparticles powder.

The obtained composite copper nanoparticles powder was used to calculate the number of surface groups per 1 $nm^2$ of the copper nanoparticle surface area, and the particle size distribution in organic solvents as described below, and the particle density was observed.

The amount of n-octyl trimethoxysilane (OTMS) equivalent to the forming a monolayer was calculated to be 0.14 g using the above-mentioned formula (B). In the formula (B), the area occupied by one n-octyl trimethoxysilane (OTMS) molecule was 0.33 $nm^2$, the molecular weight was 234 g/mol, and the Avogadro constant was 6.02 x $10^{23}$ molecules/mol.

[Particle size distribution in organic solvent]

The particle size distribution of the composite copper nanoparticles in organic solvent was measured using a laser diffraction wet particle size distribution meter (e.g., "SALD-7100" manufactured by Shimadzu Corporation).

The sample used for particle size distribution measurement was a dispersion in which 0.1 g of the composite copper nanoparticles were dispersed in 23.7 g of ethanol using an ultrasonic homogenizer. The evaluation index for particle size distribution measurement in the organic solvent was the average median diameter calculated from the particle size distribution, measured three times for the same sample.

It is known that when the median diameter in an organic solvent is 0.3 μm or less, the density of the coating film made from the pasted particles is improved (surface roughness is low).

The obtained powder of the composite copper nanoparticles was used to calculate the number of surface groups per 1 $nm^2$ of the surface area of the copper nanoparticles using the above-mentioned method, the particle size distribution in an organic solvent as described below was measured, and the particle density was observed.

The amount of n-octyl trimethoxysilane (OTMS) equivalent to the formation of a monolayer was calculated to be 0.14 g using the above-mentioned formula (B). In the formula (B), the area occupied by one n-octyl trimethoxysilane (OTMS) molecule was 0.33 $nm^2$, the molecular weight was 234 g/mol, and the Avogadro constant was 6.02 x $10^{23}$ molecules/mol.

[Example 2]

The amount of n-octyl trimethoxysilane added was changed to 0.6 times that of Example 1. All other conditions were the same as in Example 1.

[Example 3]

The amount of n-octyl trimethoxysilane added was changed to 0.7 times that of Example 1. All other conditions were the same as in Example 1.

[Example 4]

The amount of n-octyl trimethoxysilane added was changed to 1.5 times that of Example 1. All other conditions were the same as in Example 1.

[Example 5]

The amount of n-octyl trimethoxysilane added was changed to 3.3 times that of Example 1. All other conditions were the same as in Example 1.

[Example 6]

n-Octyl trimethoxysilane was replaced with n-propyl trimethoxysilane (PTMS). All other conditions were the same as in Example 1.

[Example 7]

n-Octyl trimethoxysilane was replaced with n-hexyltrimethoxysilane (HTMS). All other conditions were the same as in Example 1.

[Example 8]

n-Octyl trimethoxysilane was replaced with n-decyl trimethoxysilane (DTMS). All other conditions were the same as in Example 1.

[Comparative Example 1]

Copper nanoparticles that had not been surface-modified with a silane coupling agent were evaluated. The evaluation items were the same as in Example 1.

[Comparative Example 2]

The amount of n-octyl trimethoxysilane added was changed to 5 times that of Example 1. All other conditions were the same as in Example 1.

The results of Examples 1 to 5 and Comparative Example 1 are shown in Table 1.

[Table 1]

| | Example 1 | Example 2 | Example 3 | Example 4 | Example 5 | Example 6 | Example 7 | Example 8 | Comp. Example 1 | Comp. Example 2 |
|---|---|---|---|---|---|---|---|---|---|---|
| SC agent Kinds | OTMS | OTMS | OTMS | OTMS | OTMS | PTMS | HTMS | DTMS | - | OTMS |
| SC agent Alkyl chain Length | C8 | C8 | C8 | C8 | C8 | C3 | C6 | C10 | - | C8 |
| SC agent Added amount (Monolayer equivalent = 1.0 time) | 1.0 time | 0.6 times | 0.7 times | 1.5 times | 3.3 times | 1.0 time | 1.0 time | 1.0 time | - | 5.0 times |
| Mass carbon concentration derived from SC agent in composite copper nanoparticles [% by mass] | 0.27 | 0.18 | 0.2 | 0.42 | 0.92 | 0.1 | 0.2 | 0.34 | - | 1.39 |
| Number of surface groups derived from SC agent on the surface of the composite copper nanoparticles [pcs/nm$^2$] | 2.9 | 1.9 | 2.1 | 4.5 | 9.9 | 2.9 | 2.9 | 2.9 | - | 15 |
| Median diameter of composite copper nanoparticles [μm] | 0.231 | 0.266 | 0.242 | 0.245 | 0.277 | 0.271 | 0.242 | 0.236 | 0.573 | 0.322 |

# EP 4 563 266 A1

<Evaluation 1>

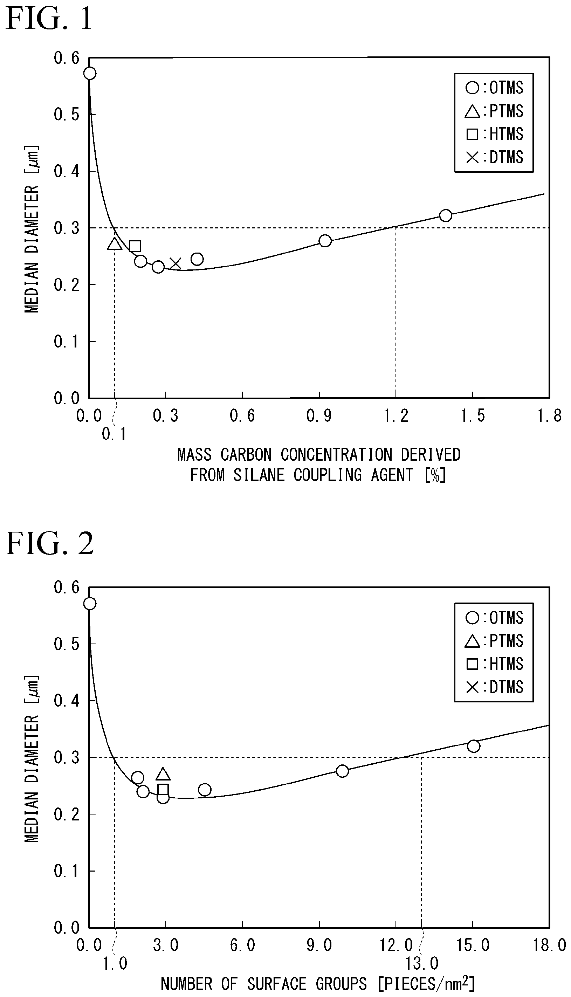

FIG. 1 is a graph showing the relationship between the mass carbon concentration derived from the silane coupling agent and the median diameter for the above-mentioned Examples 1 to 8 and Comparative Examples 1 and 2. In FIG. 1, the X-axis is the mass carbon concentration derived from the silane coupling agent, and the Y-axis is the median diameter of the composite copper nanoparticles dispersed in the organic solvent.

As shown in FIG. 1, from the intersection of the approximation curve derived from the results of Examples 1 to 8 and Comparative Examples 1 and 2 with the straight line of the median diameter of 0.30 $\mu$m, it was confirmed that the median diameter of the composite copper nanoparticles in the organic solvent was 0.30 $\mu$m or less when the mass carbon concentration derived from the silane coupling agent was in the range of 0.1 to 1.2% by mass.

<Evaluation 2>

FIG. 2 is a graph showing the relationship between the number of the surface groups and the median diameter for the above-mentioned Examples 1 to 8 and Comparative Examples 1 and 2. In FIG. 2, the X-axis is the number of the surface groups per 1 nm$^2$ of the silane coupling agent attached to the surface of the copper nanoparticles, and the Y-axis is the median diameter of the composite copper nanoparticles dispersed in an organic solvent.

As shown in FIG. 2, from the intersection of the approximation curve derived from the results of Examples 1 to 8 and Comparative Examples 1 and 2 with the straight line of the median diameter of 0.30 $\mu$m, it was confirmed that the median diameter of the composite copper nanoparticles in the organic solvent was 0.30 $\mu$m or less when the number of surface groups per 1 nm$^2$ was in the range of 1.0 to 13.0.

INDUSTRIAL APPLICABILITY

The composite copper nanoparticles of the present invention can be used as an electrode film material for various electronic components. In particular, the composite copper nanoparticles of the present invention are suitable as an electrode film material that uses oxides or ceramics as a base material and is sintered at 300°C or higher to form a film. Specifically, the composite copper nanoparticles of the present invention can be used as an electrode material for mounting electronic components such as sensors, batteries, capacitors, and resistors on a printed circuit board.

## Claims

1. Composite copper nanoparticles in which the surfaces of copper nanoparticles are modified with a silane coupling agent,

   wherein the copper nanoparticles have a coating film containing copper oxide on at least a part of the surface, and wherein the mass carbon concentration derived from the silane coupling agent in the composite copper nanoparticles is 0.1 to 1.2% by mass with respect to the total mass of the composite copper nanoparticles.

2. The composite copper nanoparticles according to Claim 1, wherein the mass carbon concentration derived from the silane coupling agent in the composite copper nanoparticles is 0.2 to 0.5% by mass with respect to the total mass of the composite copper nanoparticles.

3. The composite copper nanoparticles according to Claim 1 or 2, wherein the mass carbon concentration derived from the copper nanoparticles in the composite copper nanoparticles is 0.3% by mass or less with respect to the total mass of the composite copper nanoparticles.

4. Composite copper nanoparticles in which the surfaces of copper nanoparticles are modified with a silane coupling agent,

   wherein the copper nanoparticles have a coating film containing copper oxide on at least a part of the surface, and wherein the number of surface groups derived from the silane coupling agent on the surface of the composite copper nanoparticles is 1.0 to 13.0 per 1 nm$^2$ of the surface area of the composite copper nanoparticles.

5. The composite copper nanoparticles according to Claim 1 or 4, wherein the silane coupling agent is an alkylsilane.

6. The composite copper nanoparticles according to Claim 5, wherein the silane coupling agent is an alkylsilane having an alkyl chain having 3 to 10 carbon atoms.

7. The composite copper nanoparticles according to Claim 6, wherein the silane coupling agent is n-octyl trimethoxysilane.

8. The composite copper nanoparticles according to Claim 1 or 4, wherein the average particle size of the copper nanoparticles is 200 nm or less.

9. A method for manufacturing composite copper nanoparticles in which the surfaces of copper nanoparticles are modified with a silane coupling agent, comprising:

preparing copper nanoparticles having a coating film containing copper oxide on at least a part of the surface, an organic solvent, and a silane coupling agent;
preparing a mixture of the copper nanoparticles, the organic solvent, and the silane coupling agent; and
pressurizing the mixture and feeding it into a capillary flow path, subjecting the mixture to collision and shear forces to disperse the mixture and obtain a dispersion;
wherein the amount of the silane coupling agent added is 0.6 to 3.3 times the amount equivalent to the formation of a monolayer on the surfaces of the copper nanoparticles.

# FIG. 1

# FIG. 2

## INTERNATIONAL SEARCH REPORT

| International application No. |
| --- |
| **PCT/JP2023/024954** |

| | |
| --- | --- |
| **A. CLASSIFICATION OF SUBJECT MATTER** | |

***B22F 1/00***(2022.01)i; ***B22F 1/052***(2022.01)i; ***B22F 1/102***(2022.01)i; ***C09C 3/06***(2006.01)i; ***C09C 3/08***(2006.01)i
FI:    B22F1/00 L; B22F1/052; B22F1/102; C09C3/06; C09C3/08

According to International Patent Classification (IPC) or to both national classification and IPC

**B. FIELDS SEARCHED**

Minimum documentation searched (classification system followed by classification symbols)

B22F1/00; B22F1/052; B22F1/102; C09C3/06; C09C3/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2017-165796 A (RICOH CO., LTD.) 21 September 2017 (2017-09-21) claims, paragraphs [0013], [0020]-[0027] | 1, 3-8 |
| A | | 2, 9 |
| P, X | JP 7121173 B1 (TAIYO NIPPON SANSO CORP.) 17 August 2022 (2022-08-17) claims | 1-3, 8-9 |

☐ Further documents are listed in the continuation of Box C.      ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **09 August 2023** | **22 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/024954**

| Patent document cited in search report | Publication date (day/month/year) | Patent family member(s) | Publication date (day/month/year) |
|---|---|---|---|
| JP 2017-165796 A | 21 September 2017 | (Family: none) | |
| JP 7121173 B1 | 17 August 2022 | WO 2023/002884 A1 claims | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017165796 A
- JP 2015110682 A
- JP 6130616 B
- WO 6130616 A